# EUROPEAN PATENT APPLICATION

(11) **EP 2 879 198 A1**
(43) Date of publication of application: **03.06.2015**
(21) Application number: 14192084.3
(22) Date of filing: 06.11.2014
(51) Int. Cl.: H01M 2/02, H01M 2/20, H01M 2/10

(54) **Battery assembly internal connection device**

(30) Priority: 02.12.2013 US 201314093875
(71) Applicant: Delphi Technologies, Inc., Troy MI 48007 (US)
(72) Inventor: Beer, Robert C., Noblesville, IN 46062 (US); Ebenhart, Mark, A., Kokomo, IN 46902 (US); Lawrence, Robert, A., Frankfort, IN 46041 (US)
(74) Representative: Robert, Vincent

(57) **Abstract**

A battery assembly internal connection device (10) for making an electrical connection within a battery assembly (12) that includes a plurality of cells (14). The device (10) is operable from a pre-stage position (18) where no electrical connection is made to a final position (20) where an electrical connection is made. The device (10) includes a terminal (30A) configured to make electrical contact with a first electrode (16A) of a cell (14A) when the device (10) is operated to the final position (20). The terminal (30A) may optionally include a sharp portion (40A) configured to cut through dielectric material (36) covering the first electrode (16A) as the device (10) is operated from the pre-stage position (18) to the final position (20).

## Description

### TECHNICAL FIELD OF INVENTION

This disclosure generally relates to an internal connection device for a battery assembly, and more particularly relates to a terminal configured to make electrical contact with a cell when the device is pushed into the battery assembly.

### BACKGROUND OF INVENTION

It is known to provide electrical contact or connections to individual cells within a battery assembly to improve performance monitoring of the individual cells that make up the battery assembly. It has been suggested that for reasons of safety, electrical contact with the individual cells and coupling of the cells so the battery can produce a high voltage should be avoided until as late in the assembly process as feasible. For example, the various interconnections and contacts should be made at the time a safety cover is installed onto the battery.

Prior attempts to make electrical contact with cells within a battery have involved attaching leads (e.g. wires or lead-frames) to the cells prior to assembly so an electrical connection to the cells is available at the exterior of the battery when the cells are arranged to form the battery. One of the typical battery constructions utilizes multiple cylindrical shaped cells arranged in multiple cell strings referred to as a cell stick. These cell sticks may be assembled one at a time during assembly of the battery, or these cell sticks may be pre-assembled by the cell manufacturer. In general, making contact with cells located in the middle of the cell string or the battery has been problematic.

### SUMMARY OF THE INVENTION

In accordance with one embodiment, a battery assembly internal connection device for making an electrical connection within a battery assembly is provided. The battery assembly includes a plurality of cells. The device is operable from a pre-stage position where no electrical connection is made to a final position where an electrical connection is made. The device includes a terminal configured to make electrical contact with a first electrode of a cell when the device is operated to the final position.

In another embodiment, a battery assembly is provided. The battery assembly includes a plurality of cells, and an internal connection device. The device is for making an electrical connection within the assembly. The device is operable from a pre-stage position where no electrical connection is made to a final position where an electrical connection is made. The device includes a terminal configured to make electrical contact with a first electrode of a cell of the assembly when the device is operated from the pre-stage position to the final position.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a partial cut-away perspective view of a battery assembly in accordance with one embodiment;
Fig. 2 is a perspective view of an internal connection device used in the assembly of Fig. 1 in accordance with one embodiment;
Figs. 3A and 3B are cut-away end views of the assembly of Fig. 1 in accordance with one embodiment;
Fig. 4 is a perspective view of the device of Fig. 2 in accordance with one embodiment;
Fig. 5 is an exploded perspective view of the device of Fig. 2 in accordance with one embodiment; and
Figs. 6A, 6B, 6C are sectional views of the assembly of Fig. 1 in accordance with one embodiment.

### DETAILED DESCRIPTION

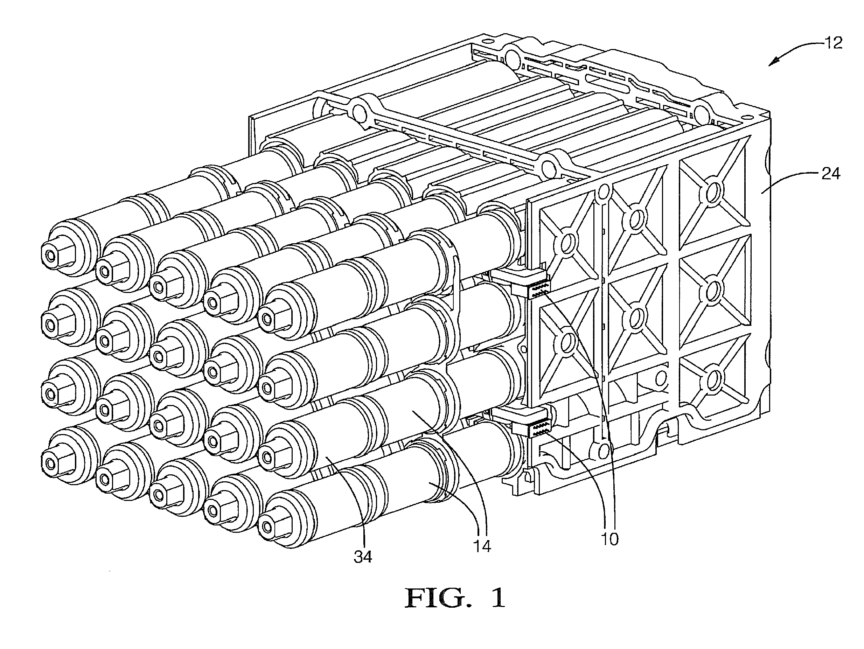

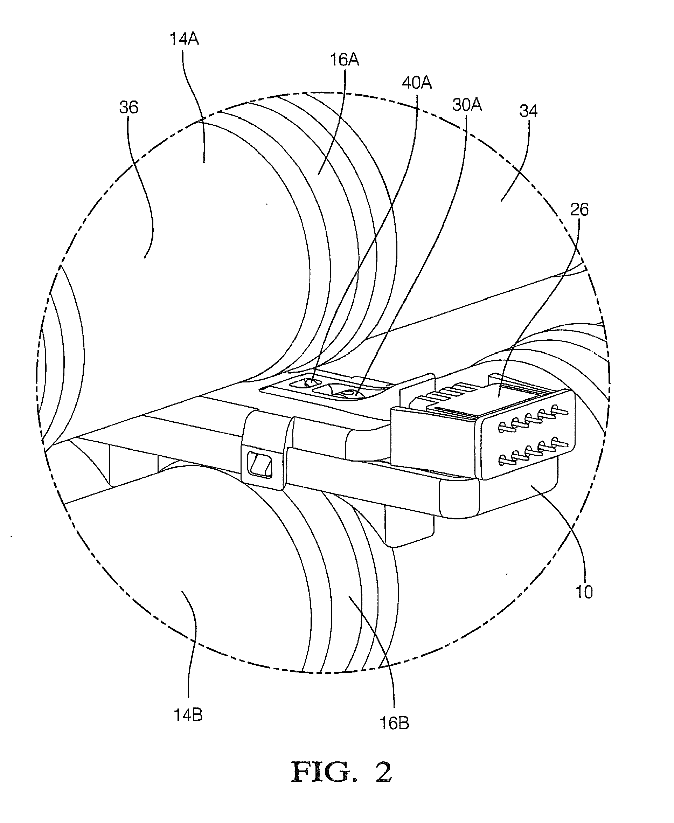

Figs. 1 and 2 illustrate non-limiting examples of a battery assembly internal connection device, hereafter referred to as the device 10. The device 10 is configured to make an electrical connection within a battery assembly, hereafter referred to as the assembly 12. In general, the device 10 is configured to make electrical contact with one or more of the plurality of cells 14 that form or make up the assembly 12. More specifically, the device 10 is configured to make electrical contact with, for example, a first electrode 16A or 16B of a cell 14A or 14B of the battery (the assembly 12).

Fig. 1 shows part of a housing 24 of the assembly 12 removed so the cells 14 can be seen. It is contemplated that the housing 24 would enclose all of the cells 14 to protect the cells 14 from moisture, dirt, contamination, and impact damage. It is also contemplated that the housing 24 may include other features not shown that aid with electrically interconnecting the cells 14 in a manner so the assembly 12 can output a relatively high voltage by interconnecting some or all of the cells 14 in a series-wise manner.

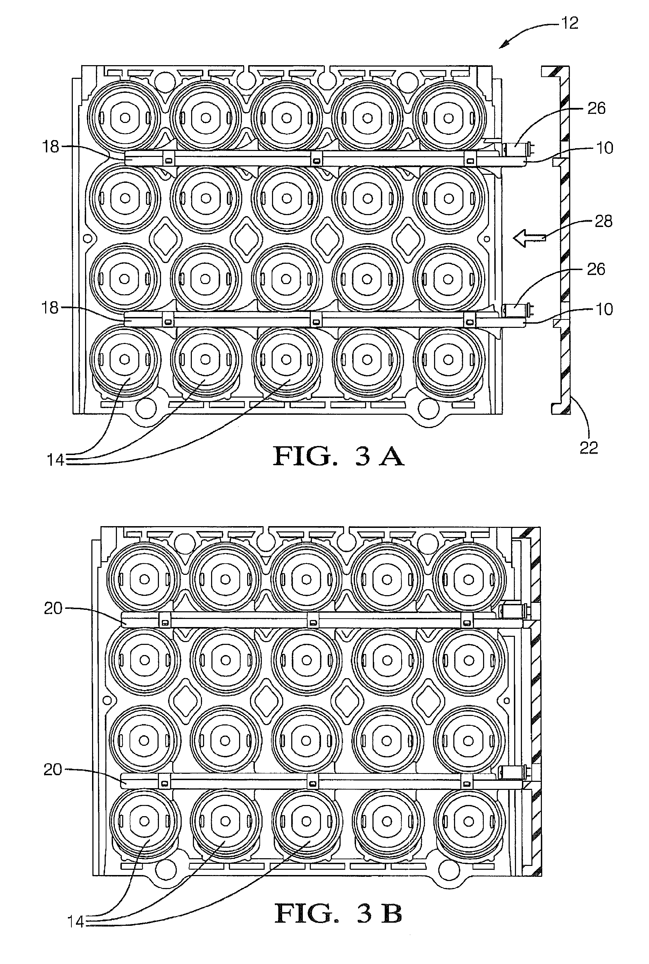

Figs. 3A and 3B together illustrate a non-limiting example of the device 10 installed in the assembly 12 at two distinct positions relative to the assembly 12. Fig. 3A illustrates the device 10 located at a pre-stage position 18 where no electrical connection is made to the cells 14. In contrast, Fig. 3B illustrates the device located at the final position 20 where an electrical connection is made to the cells 14. The details of this electrical connection will be provided later. As such, the device 10 is configured to be operated (i.e. advanced, pushed, moved) from the pre-stage position 18 to the final position 20. When the assembly 12 is being assembled by, for example, arranging the cells 14 in the housing 24, the device 10 is preferably at the pre-stage position 18 so that there is no voltage present on a connector 26 of the device. Then, as a last step for example, the device 10 can be operated from the pre-stage position 18 to the final position 20. This is advantageous so that voltages are only present at the connector 26 after all other steps for assembling the assembly 12 have been performed, thereby reducing the risk of electrical shock or inadvertent shorting of the various pins in the connector while the assembly 12 is being assembled.

By way of example and not limitation, the assembly 12 may include a cover 22 (not shown in Figs. 1 or 2) configured to operate the device 10 from the pre-stage position 18 to the final position 20 when the cover 22 is installed onto the assembly 12 in accordance with the direction indicated by arrow 28. While not shown, it is contemplated that the cover 22 may include, for example, other features that aid with interconnecting the cells 14 in such a way so that a relatively high voltage is not available from the assembly 12 until the cover 22 is installed.

Referring again to Fig. 2, the device 10 generally includes a terminal 30A configured to make electrical contact with the first electrode 16A of the cell 14A. Contact is generally made when the device 10 is operated from the pre-stage position 18 as illustrated in Fig. 2 and 3A to the final position where the terminal 30A makes contact with the first electrode 16A.

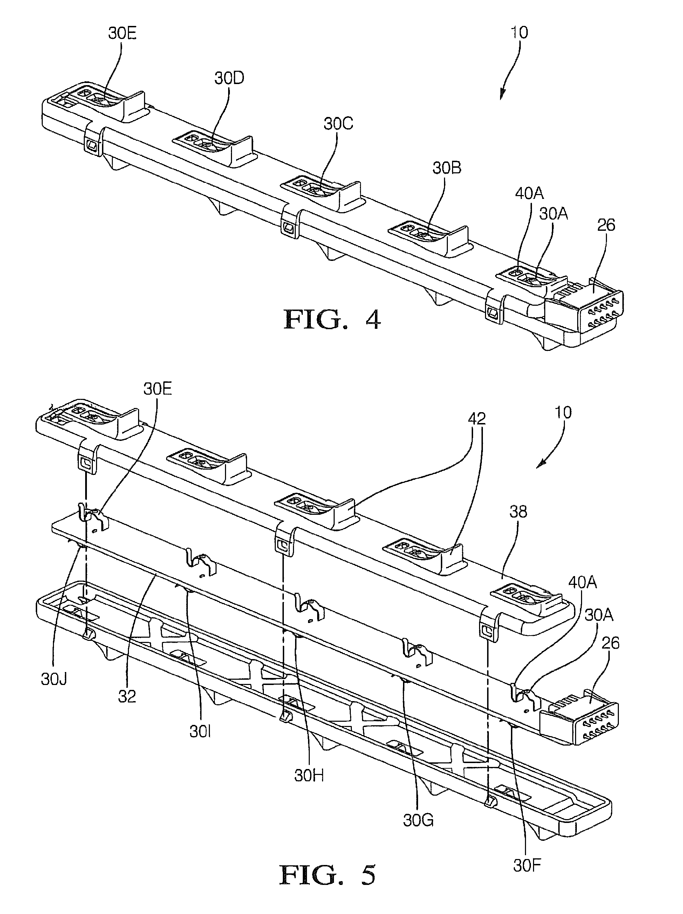

Figs. 4 and 5 further illustrate details of the device 10 when viewed apart from the assembly 12. In this non-limiting example, the device 10 includes a plurality of terminals 30A-30J, and each of the plurality of terminals is configured to contact the first electrodes of each of the plurality of cells (e.g. 14A, 14B, and others), respectively, when the device 10 is operated to the final position 20 shown in Fig. 3B. The device 10 may include a circuit board 32 to which the terminals 30A-30J are attached. The circuit board may be formed of the well-known FR-4 circuit board material. The terminals 30A-30J may be formed of metal such as beryllium copper with suitable spring characteristics, as will be recognized by those in the art. The terminals 30A-30J may be attached or coupled to the circuit board 32 by crimping, soldering, or a spring force onto the circuit board 32 provided by the terminals 30A-30J, or any combination thereof, as will be recognized by those in the art.

The circuit board 32 may also include conductor traces (not shown) to electrically couple the connector 26 to the terminals 30A-30J so that the connector 26 can advantageously be located or positioned on the device 10 to be proximate to an exterior surface (e.g. the housing 24) of the assembly 12. The circuit board 32 may be enclosed in a case 38 formed of a suitable polymeric compound.

The cells 14 preferably have a cylindrical shape for reasons that will become apparent in the description below. A common configuration of the cells is for the cylindrical body of each cell to be part of an electrical connection to the cells, and so the first electrode 16A defines the cylindrical shape of the cell 14A. It has been proposed that several cells to be pre-assembled in a series-wise arrangement to form a cell stick 34 (Figs. 1-2). To hold the cell stick 34 together, the cell stick 34 may be conveniently encased with a dielectric material 36 heat-shrink tubing formed of a thermoplastic material such as a polyolefin, a fluoropolymer (e.g. FEP, PTFE), or PVC. While encasing the cell stick 34 with heat-shrink tubing may be convenient, the dielectric material 36 interferes with the terminal 30A making contact with the first electrode 16A unless the dielectric material 36 covering the first electrode 16A is at least partially removed.

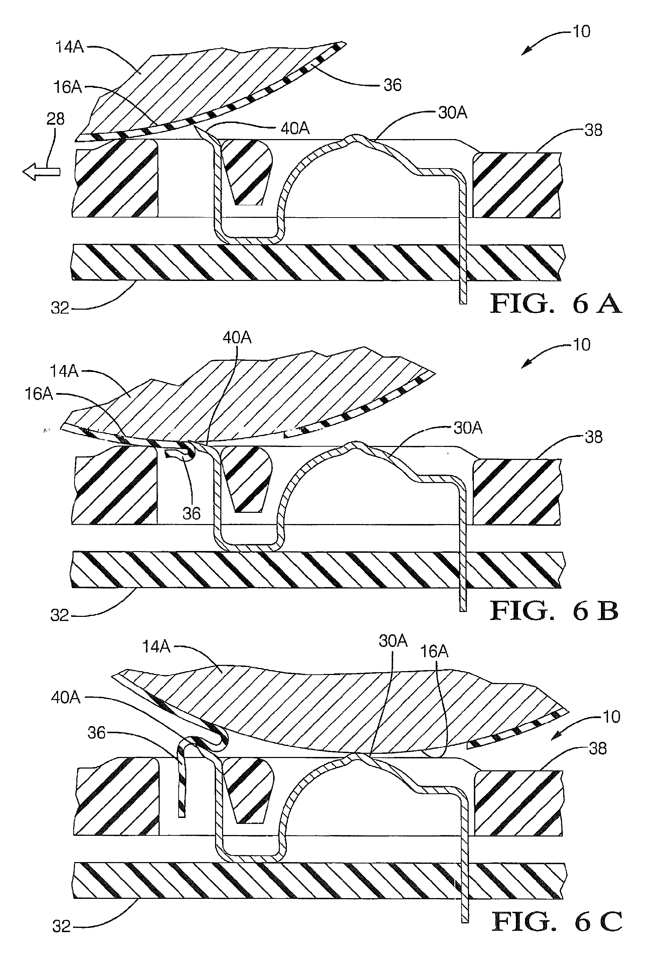

Figs. 6A, 6B, and 6C illustrate a non-limiting example of a sequence of events whereby a portion of the dielectric material 36 is removed to expose the first electrode 16A so that the terminal 30A can make electrical contact with the first electrode 16A. In order to remove some of the dielectric material 36, the terminal 30A may include a sharp portion 40A configured to cut through dielectric material 36 covering the first electrode 16A, 16B as the device 10 is operated from the pre-stage position 18 to the final position 20.

Fig. 6A illustrates a non-limiting example of the position of the sharp portion 40A relative to the dielectric material 36 as the device 10 advances in the direction of the arrow 28 prior to cutting/peeling of the dielectric material 36.

Fig. 6B illustrates a non-limiting example of how the sharp portion 40A has pierced and started to peel away some of the dielectric material 36 to expose the first electrode 16A.

Fig. 6C illustrates a non-limiting example of the terminal 30A making electrical contact with the first electrode 16A after the dielectric material 36 has been removed.

While the sharp portion 40A is illustrated as a simple sharpened end of the terminal 30A, more complicated configurations are contemplated that include, for example, knife edges that cut through or slice the dielectric material 36 to form parallel slits in the dielectric material 36 prior to the sharp portion 40A making a radial cut as illustrated to peel away a portion of the dielectric material 36 covering the cell stick 34.

Referring again to Fig. 5, the device 10 may also include one or more wedge portions 42 configured to mechanically support the cells 14 within the assembly 12. The wedge portions 42 may help to reduce relative motion between, for example, the terminal 30A and the first electrode 16A and thereby reduce the effects of fretting corrosion or wear of whatever plating materials are applied to the contact surfaces of the first electrode 16A and/or the terminal 30A.

The device 10 may also include a latch feature (not shown) that cooperates with the housing 24 to hold the device in the final position 20 after the device 10 is operated to the final position. It is recognized that if the device 10 did not include the wedge portions that the device 10 could be inserted into the assembly 12 after the cells 14 had been arranged as opposed to having to arrange the device 10 between the cells 14 as the assembly 12 was being assembled. Furthermore, if the device was configured to be inserted into the assembly 12 after the cells 14 had been arranged, the device 10 may only need one cutting means on the device 10 opposite the connector 26 to remove the dielectric material 36 from all of the cells 14 adjacent the device 10.

Accordingly, a battery assembly internal connection device (the device 10) and a battery assembly (the assembly 12) are provided. The device 10 provides a convenient way to make electrical contact with the cells 14 of the assembly 12 late in the assembly process of the assembly 12 so that voltages from the cells 14 are not present for inadvertent or unintentional contact and/or shorting during the assembly process. The device 10 may be configured to provide a means (e.g. the sharp portion 40A) to cut through dielectric material 36 covering the cells 14 so that electrical contact with each of the cells 14 can be made.

While this invention has been described in terms of the preferred embodiments thereof, it is not intended to be so limited, but rather only to the extent set forth in the claims that follow.

## Claims

1. A battery assembly internal connection device (10) for making an electrical connection within a battery assembly (12) that includes a plurality of cells (14), wherein the device (10) is operable from a pre-stage position (18) where no electrical connection is made to a final position (20) where an electrical connection is made, said device (10) comprising:
a terminal (30A) configured to make electrical contact with a first electrode (16A) of a cell (14A) when the device (10) is operated to the final position (20).

2. The device (10) in accordance with claim 1, wherein the device (10) includes a plurality of terminals (30A), and each of the plurality of terminals (30A) is configured to contact the first electrode (16A) of each of the plurality of cells (14) when the device (10) is operated to the final position (20).

3. The device (10) in accordance with claim 1 or 2, wherein the device (10) includes a connector (26) electrically coupled to the terminal (30A) and positioned on the device (10) to be proximate to an exterior surface of the assembly (12).

4. The device (10) in accordance with any one of claims 1 to 3, wherein the cell (14A) is **characterized by** a cylindrical shape, and the first electrode (16A) defines the cylindrical shape.

5. The device (10) in accordance with any one of claims 1 to 4, wherein the terminal (30A) includes a sharp portion (40A) configured to cut through dielectric material (36) covering the first electrode (16A) as the device (10) is operated from the pre-stage position (18) to the final position (20).

6. The device (10) in accordance with any one of claims 1 to 5, wherein the device (10) includes a wedge portion configured to mechanically support the cell (14A).

7. A battery assembly (12) comprising:
a plurality of cells (14); and
an internal connection device (10) according to any one of the preceding claims.

8. The assembly (12) in accordance with claim 7, wherein the assembly (12) includes a cover (22) for the assembly (12), wherein the cover (22) is configured to operate the device (10) from the pre-stage position (18) to the final position (20) when the cover (22) is installed onto the assembly (12).
